(19) Europäisches Patentamt

European Patent Office

Office européen des brevets

(11) Veröffentlichungsnummer: **0 489 378 A1**

# (12) EUROPÄISCHE PATENTANMELDUNG

(21) Anmeldenummer: **91120648.0**

(22) Anmeldetag: **30.11.91**

(51) Int. Cl.5: **G02B 17/00**, G02B 17/08, G02B 3/00

(30) Priorität: **04.12.90 DE 4038639**

(43) Veröffentlichungstag der Anmeldung:
**10.06.92 Patentblatt 92/24**

(84) Benannte Vertragsstaaten:
**AT BE CH DE DK ES FR GB GR IT LI LU NL SE**

(71) Anmelder: **INTERNATINAL TECHNOLOGY EXCHANGE CORPORATION**
**10641 First Street East**
**Treasure Island, Florida 33706(US)**

(72) Erfinder: **Rubin, Leonid B., Prof.**
**Lomonosovsky Prospekt 14, kv 499**
**Mokau(SU)**

(74) Vertreter: **Nix, Frank Arnold, Dr.**
**Kröckelbergstrasse 15**
**W-6200 Wiesbaden(DE)**

(54) **Achromatische Linse.**

(57) Es wird eine achromatische Linse großer Apertur vorgeschlagen, die auch außerhalb des paraxialen Gebietes achromatisch ist und die die Achromasie und eine hohe Auflösung in einem breiten Spektralbereich, darunter dem ultravioletten Bereich gewährleistet. Es werden die Formeln angegeben, denen die Linse zur Lösung dieser Aufgabe genügen muß.

Fig. 5

Die vorliegende Erfindung bezieht sich auf eine achromatische Linse und deren Anwendung im optischen Gerätebau, beispielsweise in Fotoapparaten, Projektionsgeräten, Beleuchtungsanordnungen und Spektralgeräten.

Bekannte optische Systeme dieser Art sind bestimmt entweder zur Übertragung von Lichtenergie oder von Abbildungen in einem bestimmten Spektralbereich. Bei der Erzeugung von Abbildungen mittels eines optischen Systems werden zur Ermöglichung der Übertragung einer maximalen Energie bei hoher Qualität der erzeugten Abbildung spezielle Korrekturlinsen verwendet, welche die monochromatische Aberration des optischen Systems kompensieren.

Um nicht eine zusätzliche Chromasie, beispielsweise in einem optischen Spiegelsystem, einzubringen, muß eine solche Kompensatorlinse achromatisch sein.

Bekannte achromatische Linsen zur Kompensation von monochromatischen Aberrationen sind Meniskuslinsen einer Dicke d mit zwei sphärischen Brechungsflächen mit den Krümmungsradien $r_1$ und $r_2$ aus einem Werkstoff mit dem Brechungskoeffizienten n.

Aus "Angewandte Optik", Moskau 1982, Verlag "Nedra", Seite 532 bis 534 ist die achromatische Linse nach     urilovskij bekannt, die speziell zur Kompensation der Koma eines Parabolspiegels erarbeitet wurde. Diese Linse hat die Form eines Meniskus mit gleichen Krümmungsradien der beiden Brechungsoberflächen, also $r_1 = r_2$, und wird im optischen System derart angeordnet, daß die Strahlen innerhalb der Linse parallel zu ihrer optischen Achse verlaufen. Diese Linse ist nur im Bereich der Paraxialstrahlen achromatisch, das heißt eine Chromasie fehlt nur im Bereich der Strahlen, die unter einem kleinen Winkel zur optischen Achse verlaufen.

Unter Paraxialgebiet ist das Gebiet zu verstehen, in dem

$$\delta = \left|\frac{h_0}{r_1}\right| \ll 1 \quad \text{und} \quad \delta_1 = \left|\frac{h_0}{a_1}\right| \ll 1$$

gilt, wobei mit $h_0$ der Achsabstand des Randstrahls beim Durchtritt durch die erste Brechungsfläche mit dem Krümmungsradius $r_1$ und $a_1$ der Abstand der ersten Brechungsfläche von der Gegenstandsebene ist. Lichtstarke optische Systeme, für die eine große Eintrittsapertur kennzeichnend ist, umfassen gewöhnlich auch in erheblichem Maße den nicht paraxialen Bereich. Im nicht paraxialen Bereich tritt bei der Linse nach     urilovskij eine Chromasie auf, und zwar auf Grund des Einflusses von nichtkompensierten chromatischen Aberrationen höherer Ordnung. Dies schränkt prinzipiell die Möglichkeiten des Einsatzes dieser Linse in lichtstarken optischen Systemen ein. Außerdem fehlen bei der Linse nach     urilovskij die sphärischen Aberrationen der dritten Ordnung, was ihre Anwendung in Systemen mit parabolischen Spiegelflächen begrenzt.

Aus der genannten Quelle "Angewandte Optik", Seite 534 bis 536 ist auch die achromatische Linse nach Maksutov bekannt, die einen negativen Meniskus der Dicke d mit den Krümmungsradien $r_1$ und $r_2$ der Brechungsflächen darstellt. Die Parameter der Linse nach Maksutov hängen nach der folgenden Beziehung zusammen

$$d = \frac{r_2 - r_1}{(1 - 1/n^2)} \quad ,$$

wobei n der Brechungskoeffizient des Werkstoffs der Linse bei einer bestimmten Wellenlänge des Lichtes ist. Diese Linse ist speziell erarbeitet und wird in großem Umfange angewandt bei Spiegelteleskopen zur Korrektur der sphärischen Aberration und der Koma des sphärischen Spiegels. Deshalb wird diese Linse im System so angeordnet, daß die auf sie auftreffenden Strahlen des im Unendlichen liegenden Objektes parallel zur optischen Achse des Systems verlaufen, was sich auch in der Bedingung für die Achromasie der Linse ausdrückt. Eine der einschränkenden Besonderheiten der Linse nach Maksutov ist somit ihre Zweckbestimmung zur übertragung von Abbildungen von im Unendlichen liegenden Gegenständen. Im Zusammenhang hiermit geht in die die Parameter der Linse beschreibende Gleichung der Abstand der Linsenoberfläche bis zum abgebildeten Gegenstand nicht ein.

Ein weiterer Nachteil der Linse nach Maksutov ist der Umstand, daß sie nur in optischen Systemen niedriger Lichtstärke bis 1:3 verwendet werden kann, welche dabei eine Abbildung nur aus dem Unendlichen übertragen. Die Linse ist nicht anwendbar zur Übertragung einer Abbildung aus einem endlichen auf einen endlichen Abstand. Bezüglich der außerhalb des Paraxialgebietes liegenden Strahlen verliert die Linse nach Maksutov ihre Achromasie und kann zur achromatischen Kompensation von monochromatischen Aberrationen nicht verwendet werden. Die Linse nach Maksutov ist mit einer besonders starken Sphärochromasie im ultravioletten Bereich des Spektrums behaftet, was ebenfalls ihre Anwendung beschränkt. Auf diese Weise kann die Linse nach Maksutov nicht in lichtstarken optischen Systemen, und im ultravioletten Gebiet des Spektrums verwendet werden.

Der vorliegenden Erfindung liegt die Aufgabe zugrunde, eine Linse mit großer Apertur zu schaffen, die im paraxialen und außerhalb des paraxialen Gebietes achromatisch ist und eine achromatische Abbildung sowohl selbständig als auch in Verbindung mit anderen optischen Elementen erzeugen kann, wobei die Achromasie und eine hohe Auflösung in einem breiten Spektralbereich darunter dem ultravioletten Bereich erzielt wird und zwar durch Kompensation der monochromatischen Aberrationen der anderen optischen Elemente. Dabei soll die Übertragung von Abbildungen aus endlichem Abstand auf endlichen Abstand, aus dem Unendlichen auf endliche Abstände und bei Strahlenumkehr aus endlichem Abstand ins Unendliche möglich sein. Auf diese Weise soll es möglich werden, die Lichtstrahlung auf eine Fläche kleiner Abmessungen zu fokussieren, die Strahlung von Punktlichtquellen zu sammeln und lichtstarke achromatische Objektive, Spektralgeräte, Projektionsgeräte und Fotoapparate hoher Auflösung zu schaffen.

Diese Aufgabe wird erfindungsgemäß durch eine Linse gelöst, bei der die Krümmungsradien $r_1$, $r_2$ der sphärischen Brechungsflächen, die Dicke d, der Brechungskoeffizient n des Werkstoffs, aus dem die Linse besteht, sowie die Koordinate $a_1$ der Gegenstandsebene bezüglich der ersten Brechungsfläche und der Achsabstand $h_0$, in dem der zur Berechnung der Achromatisierung nach der Erfindung vorgesehene Strahl, der vom Gegenstand unter dem Winkel $\alpha_1$ zur optischen Achse ausgeht, durch die erste Brechungsfläche tritt, untereinander verknüpft sind durch die Beziehung

$$\xi_1 \sin(\gamma)\cos(\gamma - \omega) - \xi_2 \sin(\omega) = 0, \text{ wobei}$$

$$\beta_1 = \arcsin\left(\frac{h_0}{r_1}\right)$$

$$\alpha_1 = \operatorname{arctg} \frac{h_0}{[a_1 - r_1(1 - \cos\beta_1)]}$$

$$\varepsilon_1 = \arcsin\left(\frac{r_1 - a_1}{r_1}\sin\alpha\right)$$

$$\nu = \beta_1 + \arcsin\left(\frac{1}{n}\sin\epsilon_1\right)$$

$$\psi = r_1 \left[ \frac{\sin \beta_1}{\operatorname{tg} \nu} + (1 - \cos \beta_1) \right] - d$$

$$\xi_4 = - \frac{\sin \varepsilon_1}{n \sqrt{n^2 - \sin^2 \varepsilon_1}}$$

$$\xi_5 = - r_1 \frac{\sin \beta_1}{\sin^2 \nu} \xi_4$$

$$\varepsilon_2 = \arcsin \left( \frac{r_2 - \psi}{r_2} \sin \nu \right)$$

$$\omega = \nu - \epsilon_2$$

$$\xi_3 = \frac{1}{r_2 \cos \varepsilon_2} \left[ -\xi_5 \sin \nu + \xi_4 (r_2 - \psi) \cos \nu \right]$$

$$\gamma = \omega + \arcsin (n \sin \epsilon_2)$$

$$\xi_1 = \xi_4 - \xi_3$$

$$\xi_2 = \xi_1 + \frac{\sin \varepsilon_2 + \xi_3 n \cos \varepsilon_2}{\sqrt{1 - n^2 \sin^2 \varepsilon_2}}$$

wobei für die Strahlen innerhalb der benutzten Apertur der Linse im gesamten vorkommenden Spektralbereich die Bedingung erfüllt ist

$$\frac{1}{a_3} V \frac{da_3}{dn} \operatorname{tg} \alpha_1 \cong 0$$

mit $a_3$ = Koordinate der Ebene der Abbildung bezüglich des Scheitels der zweiten Brechungsfläche der Linse, und
V = Winkelvergrößerung der Linse im Gang des Strahls, der von der Spitze des Gegenstandes unter dem Winkel $\alpha_1$ zur optischen Achse ausgeht und die erste Brechungsfläche innerhalb der Apertur schneidet.

Eine Linse, deren Parameter $r_1$, $r_2$, d und n sowie der Abstand $a_1$ der vorstehend genannten Beziehung genügen und die berechnet ist für den vom Gegenstand ausgehenden Strahl, der die erste Brechungsfläche der Linse im Achsabstand $h_0$ schneidet, ist in einem breiten Spektralbereich gut achromatisch, und zwar nicht nur bezüglich dieses Strahls, sondern auch für alle anderen Strahlen, die innerhalb der benutzten Apertur im Abstand $h_0$ von der Achse liegen und sogar, wenn auch in etwas geringerem Maße, außerhalb der Grenze $h_0$.

Dieser unerwartete Effekt ist von großer praktischer Bedeutung, weil die Qualität der Abbildung von der Größe $\Delta y$ der chromatischen Querunschärfe der Abbildung eines Punktes abhängt. Dabei haben die

4

außerparaxialen Strahlen einen stärkeren Einfluß auf die Größe des Farbquerfehlers als die paraxialen Strahlen im achsnahen Gebiet. Im Zusammenhang hiermit gewährleistet die Lösung der Probleme der Achromatisierung der außerparaxialen Strahlen insgesamt geringe chromatische Aberrationen von lichtstarken optischen Systemen.

In einer der Ausführungsformen der achromatischen Linse kann der Krümmungsradius einer sphärischen Oberfläche derselben Unendlich betragen, sodaß diese Oberfläche eben und die andere sphärisch ist.

Da die nach der vorstehend angegebenen Formel berechnete Linse in einem breiten Spektralbereich achromatisch ist, können ihre monochromatischen Aberrationen verwendet werden zur Kompensation von monochromatischen Aberrationen von, beispielsweise, optischen Spiegelsystemen. Bei Verwendung dieser Linse innerhalb einem optischen Systems wird die Berechnung der Linse zweckmäßigerweise vorgenommen ausgehend von den konkreten Parametern des optischen Systems im ganzen, und zwar durch Auswahl der Linsenparameter $r_1$, $r_2$ und d bei vorgegebenem Abstand $a_1$ und Achsabstand $h_0$, welche durch die Konstruktion und die Zweckbestimmung des Geräts vorgegeben sind, und des Brechungskoeffizienten n, welche sowohl der Gleichung als auch den Anforderungen des optischen Systems im ganzen genügen. Hierzu werden, ausgehend von den konstruktiven Anforderungen an das Gerät insgesamt, die Parameter der Linse, beispielsweise $r_2$, $a_1$, n und $h_0$ vorgegeben, und auf der Grundlage der Gleichung werden die Größen der Parameter $r_1$ und d ermittelt.

Es ist von prinzipieller Bedeutung, daß ein auf diese Weise berechnetes optisches System in einem breiten Spektralbereich keine Chromasie aufweist und sowohl im paraxialen Gebiet als auch im Gebiet außerparaxialer Strahlen einsetzbar ist, wodurch es über eine große Lichtstärke und Apertur verfügt und wegen der Kompensation monochromatischer Aberrationen auch eine hohe Auflösung erzielt. Die achromatische Linse kann berechnet werden für optische Spiegelsysteme, die eine Abbildung aus dem Endlichen in das Endliche, aus dem Unendlichen ins Endliche und auch beim umgekehrten Strahlengang aus dem Endlichen ins Unendliche übertragen.

Bei kleinen Werten von $\delta_1$ geschieht die Abhängigkeit der chromatischen Unschärfe der Strahlen bei Abweichungen des Wertes h von $h_0$ langsamer, als bei großen Werten von $\delta_1$. Dabei ist die gesamte chromatische Unschärfe einer Abbildung im Vergleich mit einer Linse mit großem Wert von $\delta_1$ kleiner.

Die Anwendung der erfindungsgemäßen Linse als achromatischer Kompensator in einem Beleuchtungskondensor erlaubt die Korrektur eines ausgewählten Paares von Aberrationen, beispielsweise der sphärischen Aberration und der Koma und dadurch die Erzielung einer starken Konzentration von Lichtenergie, darunter auch im Ultraviolettgebiet des Spektrums, auf kleinen Objekten bei Verwendung von hellen Punktlichtquellen.

Die Verwendung der Linse als achromatischer Kompensator im Objektiv eines Filmprojektors erlaubt es, eine hohe Qualität der Abbildung dadurch zu erzielen, daß bei einem großen Bildfeld und einer hohen Lichtstärke des Objektivs die Auflösung erhöht ist.

Die Anwendung als achromatischer Linsenkompensator in einem Monochromator erlaubt die Erzielung einer hohen Spektralauflösung bei hoher Lichtstärke und geringem Fokalabstand.

Die Anwendung der achromatischen Linse zusammenwirkend mit zwei sphärischen Spiegeln erlaubt eine starke Konzentration eines Lichtstroms auf eine kleine Fläche, beispielsweise zur Beleuchtung des Stirnendes eines Lichtleiters.

Nachfolgend wird die Erfindung durch die Beschreibung von Ausführungs- und Anwendungsbeispielen an Hand der beigegebenen Zeichnungen weiter erläutert. Es zeigt:

Fig. 1 eine achromatische Linse und den Strahlengang durch diese bei der Erzeugung einer Abbildung;

Fig. 2 verschiedene Ausbildungsformen der achromatischen Linse;

Fig. 3 die Abhängigkeit der sphärischen Längsaberration von dem Achsabstand h des Durchtritts des Strahls durch die achromatische Linse;

Fig. 4 die Abhängigkeit der Querchromasie von der Größe h;

Fig. 5 schematisch die Anwendung der achromatischen Linse zur Korrektur der Aberration eines sphärischen Spiegels;

Fig. 6 die Abhängigkeit der sphärischen Längsaberration im optischen System gemäß Fig. 5;

Fig. 7 die Anwendung der achromatischen Linse in einem Beleuchtungskondensor;

Fig. 8 die Anwendung der achromatischen Linse zur Korrektur der Aberrationen zweier sphärischer Spiegel;

Fig. 9 die Anwendung der achromatischen Linse im Objektiv eines Kinoprojektors;

Fig. 10 die Anwendung der achromatischen Linse in einem Monochromator.

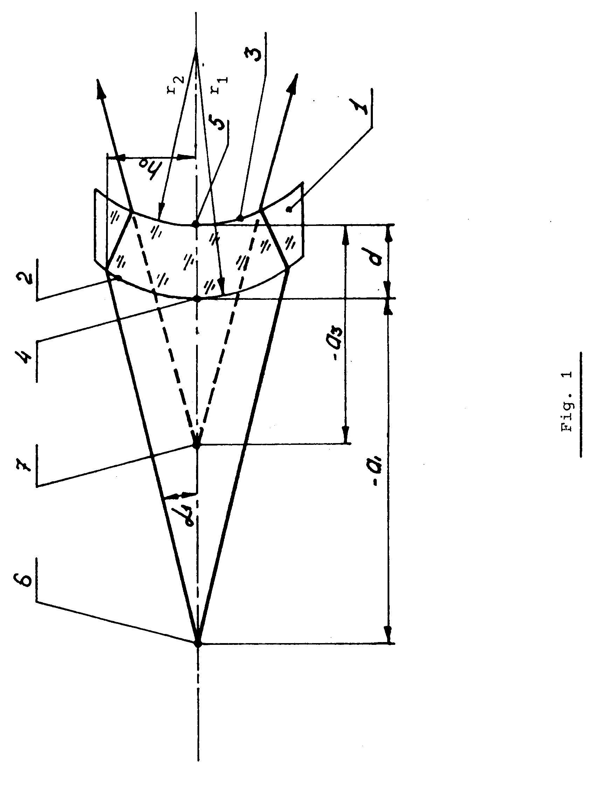

Die in Fig. 1 gezeigte Linse 1 hat die Form eines Meniskus mit zwei Brechungsflächen 2 und 3 der Krümmungsradien $r_1$ bzw. $r_2$.

Die Dicke d der Linse 1 ist der Abstand zwischen den Scheiteln 5 und 4 der Brechungsflächen 3 und 2. Der sich im Punkt 6 befindende Gegenstand hat einen Abstand von $-a_1$ vom Scheitel 4 der Linse.

Die Linse 1 erzeugt die Abbildung des Gegenstandes 6 im Punkt 7, der sich im Abstand von $-a_3$ vom Scheitel 5 befindet. Ein Strahl vom Gegenstand im Punkte 6 schneidet die Linsenfläche 2 im Abstand $h_0$ von der optischen Achse. Die Parameter

$$\xi = \left| \frac{h_0}{r_1} \right| > 0{,}1 \qquad \text{und} \qquad \xi_1 = \left| \frac{h_0}{a_1} \right| > 0{,}1$$

können als Kriterien für die Verwendung der Linse im Bereich außerparaxialer Strahlen dienen.

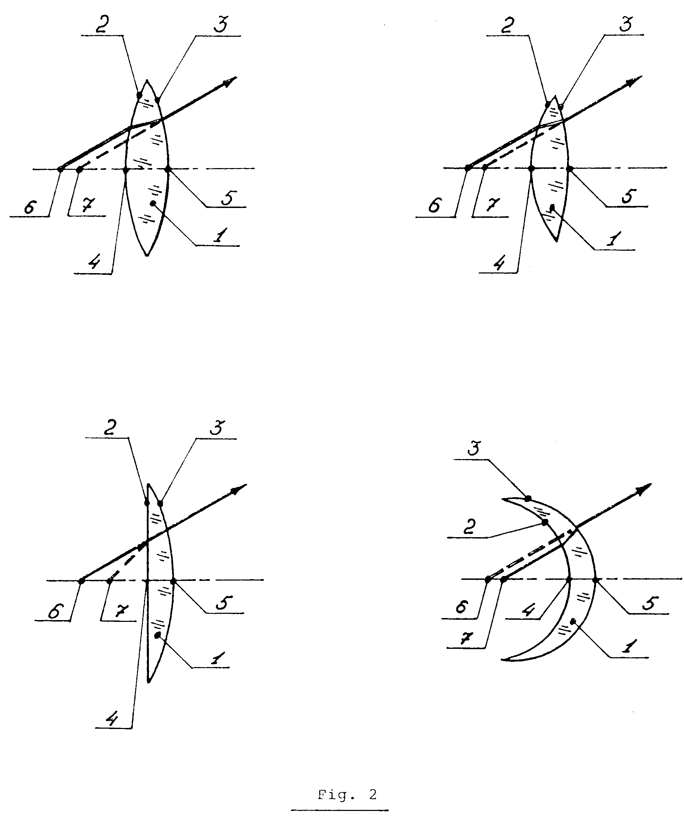

Die nach der vorstehenden Formel berechnete Linse hat keine Chromasie, und zwar auch nicht im außerparaxialen Strahlenbereich, der den größten Teil der Lichtenergie transportiert. Die Vorzeichen und die Größen der Krümmungsradien $r_1$ und $r_2$ der Linsenflächen bestimmen sich nach dem Charakter des konkreten optischen Systems. Fig. 2 zeigt verschiedenartige Ausbildungsformen achromatischer Linsen, die nach der erfindungsgemäßen Formel berechnet sind. Die Linse kann praktisch eine beliebige Form aufweisen: Negativer oder positiver Meniskus, bikonvexe Form, bikonkave Form, plankonvexe Form oder plankonkave Form.

Alle nach der vorstehend genannten Formel berechneten achromatischen Linsen müssen im Bereich der benutzten Apertur der Linse und im vorgegebenen Spektralbereich der folgenden Beziehung genügen:

$$K = \frac{I}{a_3} \ V \ \frac{da_3}{dn} \ \text{tg} \ \alpha_I \cong 0 \qquad ,$$

mit K = Koeffizient der relativen chromatischen Queraberration,
V = Winkelvergrößerung der Linse im Strahlengang, der die erste Linsenfläche unter dem Winkel $\alpha_1$ zur optischen Achse schneidet,
$a_3$ = Koordinate der Abbildungsebene bezüglich des Scheitels der zweiten Brechungsfläche der Linse.
Diese Beziehung ergibt sich aus der die Parameter der erfindungsgemäßen Linse beschreibenden Hauptgleichung:

$\xi_1 \sin \gamma \cos (\gamma - \omega) - \xi_2 \sin \omega = 0$

Wenn diese Gleichung aufgelöst wird, erhält man:

$\xi_1 \sin \gamma (\cos \omega \cos \gamma + \sin \omega \sin \gamma) - \xi_2 \sin \omega = 0$

Durch Teilen beider Glieder der Gleichung durch $\text{tg}^2 \gamma$ und nach einfachen Umformungen erhält man

$$\frac{d}{dn} \left[ \frac{\sin \omega}{\text{tg} \ \gamma} + (1 - \cos \omega ) \right] = 0$$

Aus den Gesetzen der geometrischen Optik und der Analyse der vorstehenden Gleichungen folgt

$$\frac{\sin \omega}{\text{tg} \ \gamma} + (1 - \cos \omega) = \frac{a_3}{r_2}$$

6

Auf diese Weise erhalten wir:

$$\frac{1}{r_2} \frac{da_3}{dn} = 0$$

oder

$$\frac{da_3}{dn} = 0$$

Dieser Ausdruck beweist, daß ein im Achsabstand $h_0$ durch die Linse tretender Strahl in einem vorgegebenen Bereich der Größen von n für verschiedene Wellenlängen $\lambda$ innerhalb der Grenzen des Spektralbereichs eine achromatische Abbildung erzeugt.

Wenn die Linse für die Strahlen, die durch sie im Achsabstand $h_0$ durchtreten, achromatisch ist, so ist, wie die durchgeführten Rechnungen zeigen, die Chromasie auch für die anderen Werte von h im Bereich zwischen 0 und $h_0$ sehr schwach. Dabei sind bei festliegendem h in verschiedenen Bereichen des Spektrums $\Delta a_3$ geringfügige Änderungen der Größe $a_3$ zu beobachten. Es ist charakteristisch, daß die Abhängigkeit $\Delta a_3$ von der Größe h in einem beträchtlichen Bereich dieser Größe zwischen 0 bis $h_0$ eine zügige, schwache Funktion ist. Dabei muß im Gebiet $h \cong 0$ die Chromasie nicht verschwinden, d.h. die Beziehung

$$\frac{da_3}{dn} \cong 0$$

muß nicht erfüllt sein.

Jedoch wird in Übereinstimmung mit den angeführten Berechnungen die Größe des Koeffizienten K der relativen chromatischen Queraberration wenigstens an zwei Punkten der benutzten Apertur zu Null: Bei h = 0, weil tg $\alpha_1 = 0$ und bei h = $h_0$, wo nach den Bedingungen der Achromatisierung $da_3/dn = 0$. Im Intervall zwischen diesen Grenzwerten des Parameters h muß die Größe des Koeffizienten K der relativen chromatischen Queraberration klein bleiben:

$K \cong 0$.

Die Erfüllung der Bedingung der Kleinheit von K führt dazu, daß die integrale chromatische Querunschärfe $\Delta y$ ebenfalls gering ist. Bekanntlich bestimmt sich die Größe $\Delta y$ aus der Größe der Längschromasie $\Delta a_3$, multipliziert mit dem Tangens des Winkels $\alpha_3$, unter dem der in die Linse im Achsabstand h in die Linse eintretende Strahl diese verläßt, um den Abbildungspunkt $a_3$ zu erzeugen:

$\Delta y = \Delta a_3 \cdot tg\ \alpha_3$

Dieser Ausdruck kann in Gestalt der folgenden Näherungsformel angegeben werden:

$$\Delta y \cong \frac{da_3}{dn} V \Delta n\ tg\ \alpha_1 = K\ a_3\ \Delta n$$

mit $\alpha_1$ = Winkel, unter dem der Strahl vom Gipfel des Gegenstandes die erste Brechungsfläche der Linse im Achsabstand h schneidet;
$V = \alpha_3 / \alpha_1$ - Winkelvergrößerung der Linse und $\Delta n$ = Änderung der Größe des Brechungskoeffizienten im gegebenen Intervall des Spektrums.

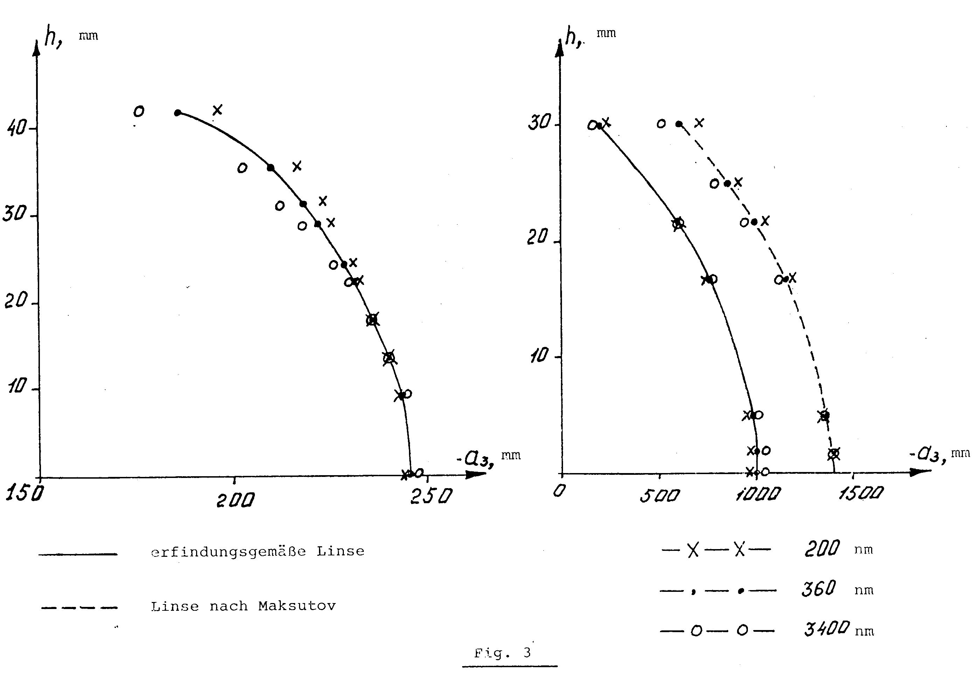

Die in Fig. 3 a, b gezeigten Abhängigkeiten illustrieren die achromatischen Eigenschaften der erfindungsgemäßen Linse in der gesamten benutzten Apertur und einem breiten Spektralbereich, einschließlich des bezüglich der Achromasie besonders schwierigen ultravioletten Bereichs des Spektrums, auch wenn die Berechnungen der Achromatisierung nur für anfänglich vorgegebene Größen $h_0$ durchgeführt wurden, wobei von den konstruktiven Aufgaben und der geforderten Größe der Eintrittsapertur ausgegangen wurde.

In Fig. 3 a, b sind mit ausgezogenen Linien die Charakteristiken der sphärischen Längsaberration der erfindungsgemäßen Linse für drei Wellenlängen $\lambda_1$ = 200 nm, $\lambda_2$ = 360 nm, $\lambda_3$ = 3400 nm dargestellt, welche ein breites Gebiet des Spektrums abdecken. Die Brechungskoeffizienten im Quarz betragen für diese Wellenlängen n = 1,55 bzw. n = 1,48 bzw. n = 1,41. Zum Vergleich ist in Fig. 3 b mit gestrichelter Linie die chromatische Längsaberration einer Quarzlinse nach Maksutov bei analogen Wellenlängen für den Fall der Übertragung einer Abbildung aus dem Unendlichen dargestellt.

Die Kurve in Fig. 3 a entspricht dem Fall der Übertragung einer Abbildung aus dem endlichen Abstand $a_1$ auf den endlichen Abstand $a_3$ mittels der in Fig. 1 gezeigten Linse, welcher bei der Berechnung folgende Parameter zugrunde gelegt wurden:

$r_1$ = 44,93 mm

$r_2$ = 36,19 mm

d = 19,26 mm

Die Berechnung der Achromatisierung der Linse nach der oben angeführten Formel wurde bei folgenden vorgegebenen Größen durchgeführt: $h_0$ = 20 mm;

$a_1$ = -385,135 mm; $r_1$ = 44,93 mm; d = 19,26 mm.

Diese Werte wurden in die Grundgleichung eingesetzt und es wurde die Größe $r_2$ ermittelt, bei der im gegebenen Spektralbereich von 200 bis 3400 nm, d.h. in einem Bereich der Brechungskoeffizienten von n = 1,55 bis 1,41, die Linse achromatisch ist, d.h. die Bedingung erfüllt

$$\frac{da_3}{dn} \cong 0 \; .$$

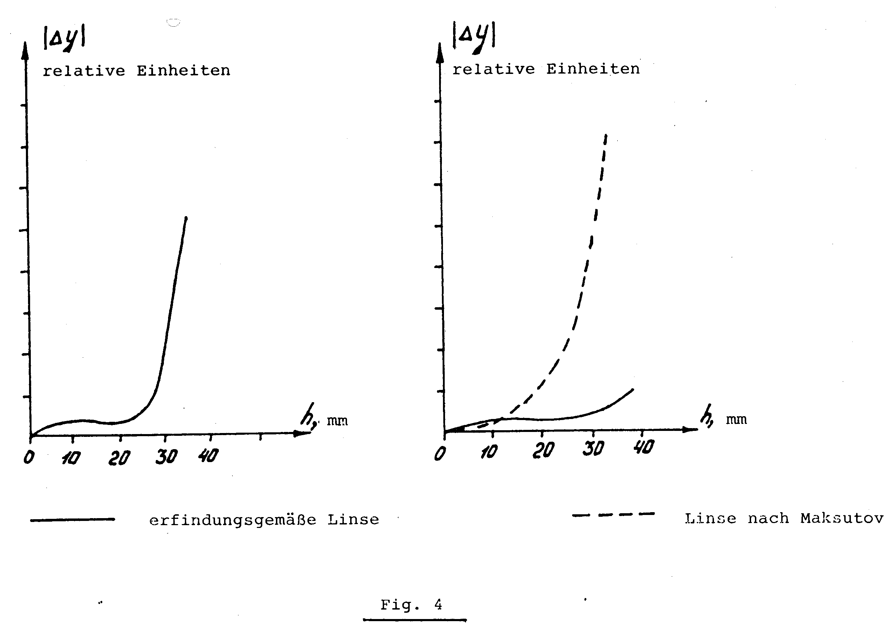

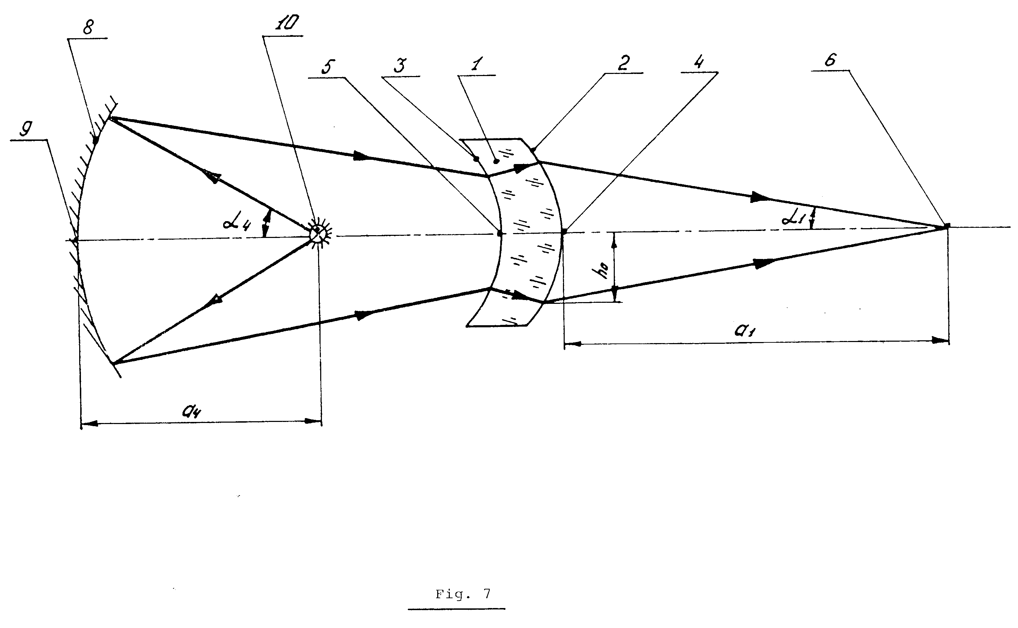

Das Diagramm gemäß Fig. 3 zeigt, daß die Streubreite der berechneten Werte von $a_3$ für die drei Wellenlängen bei $h_0$ = 20 mm, d.h. die Unterschiede der Lage der Abbildung 7 des Gegenstandspunktes 6 auf der optischen Achse 1 mm nicht übersteigen. Bei kleineren Werten von h, h < 20 mm, ist eine gewisse Vergrößerung der chromatischen Längsaberration $\Delta a_3$ zu beobachten, welche bei h = 0, d.h. im rein paraxialen Gebiet, eine Größe von 3 mm im gesamten vorkommenden Spektralbereich erreicht. Jedoch ruft die Längschromasie der Strahlen im achsnahen Gebiet, d.h. der mit geringen Achsabständen h durchtretenden Strahlen keine wesentliche chromatische Queraberration $\Delta y$ hervor, die in Fig. 4 a dargestellt ist und für die Qualität der übertragenen Abbildung bestimmend ist. Es ist anzumerken, daß die Änderungen der absoluten Größen von $a_3$ in Abhängigkeit von h eine Folge der sphärischen Aberrationen der Linse sind.

Fig. 3 b zeigt die Daten der chromatischen Längsaberration für die erfindungsgemäße Linse und die Linse nach Maksutov, die beide aus Quarz bestehen und für $-a_1$ = $-10^5$ mm berechnet sind, d.h. praktisch für Abbildungen aus dem Unendlichen. Die Parameter der erfindungsgemäßen Linse sind folgende

$r_1$ = 35 mm

$r_2$ = 30,7 mm

d = 7 mm.

Die Berechnung der Parameter der Linse wurde durchgeführt zur Achromatisierung bei einem Wert von $h_0$ = 19 mm.

Die Parameter der Linse nach Maksutov betragen gemäß der entsprechenden Formel:

$r_1$ = 35 mm

$r_2$ = 31,27 mm

d = 7 mm.

Wie aus Fig. 3 b ersichtlich ist, ist die Längschromasie der erfindungsgemäßen Linse bis dicht an den Wert h = 25 mm heran sehr schwach ausgeprägt und tritt hauptsächlich bei kleinen Werten von h auf, wobei er bei h = 0 den Wert $\Delta a_3$ = 10 mm erreicht. Im Vergleich hierzu hat die Linse nach Maksutov bei h = 0 die besseren Eigenschaften bezüglich der Längschromasie, zeigt jedoch eine sich vergrößernde Längschromasie mit wachsendem Parameter h und erreicht bei h = 20 mm einen Wert $\Delta a_3$ > 10 mm. Bei der Bewertung eines solchen Kennwertes wie der chromatischen Längsaberration, muß der Umstand berücksichtigt werden, daß die Qualität der übertragenen Abbildung hauptsächlich nur von der Querchromasie $\Delta y$ beeinflußt wird, deren Größe in Abhängigkeit von h in Fig. 4 gezeigt ist. Entsprechend Fig. 3 betrifft Fig. 4a den Fall mit $a_1$ = -385,135 mm und Fig. 4b den Fall mit $a_1$ = $-10^5$ mm.

Hieraus ist ersichtlich, daß die Querchromasie $\Delta y$ der vorgeschlagenen Linse gering ist und sich im Rahmen der benutzten Apertur nur schwach ändert, was in diesen Grenzen der gesamten benutzten Apertur gute achromatische Qualitäten gewährleistet.

Auf diese Weise ergibt sich aus den Diagrammen gemäß Fig. 3 a, b und Fig. 4 a, b die Vorteilhaftigkeit der vorgeschlagenen Linse im Vergleich zur Linse nach Maksutov bezüglich deren Achromasie im nicht paraxialen Bereich, was die Übertragung des größten Teiles der Lichtenergie bei Aufrechterhaltung einer hohen Abbildungsqualität ermöglicht.

Es ist dabei von prinzipieller Wichtigkeit, daß die Berechnung der Achromasie der Linse gemäß der Erfindung für nur den vorgegebenen Achsabstand $h_0$ von 20 mm und 19 mm (in Fig. 3 bzw. 4 a bzw. b) dennoch eine gute Achromasie für alle Werte von h innerhalb der gesamten benutzten Apertur von 0 bis 30 mm gewährleistet.

Die erfindungsgemäß vorgeschlagene achromatische Linse kann in optischen Spiegelsystemen zur Kompensation von monochromatischen Aberrationen und zur Erhöhung der Qualität der übertragenen Abbildung und anderer technischer Charakteristiken dienen, beispielsweise in Objektiven zur Beleuchtung, Lichtsammlung, Fotografie, Übertragung von Abbildungen auf endliche Entfernung oder ins Unendliche sowie auch aus dem Unendlichen ins Endliche, in Spektralapparaten: Monochromatoren, darunter auch in Doppelmonochromatoren und Dreifachmonochromatoren, in Polychromatoren sowie in anderen optischen Geräten, in denen es darauf ankommt, monochromatische Aberrationen achromatisch zu kompensieren.

Zur praktischen Anwendung der achromatischen Linse in optischen Spiegelsystemen ist eine vollständige Rechnung der Parameter des ganzen Systems auf der Grundlage des Prinzips der Achromatisierung der Linse und der Kompensation der monochromatischen Aberrationen der Spiegelelemente durchzuführen.

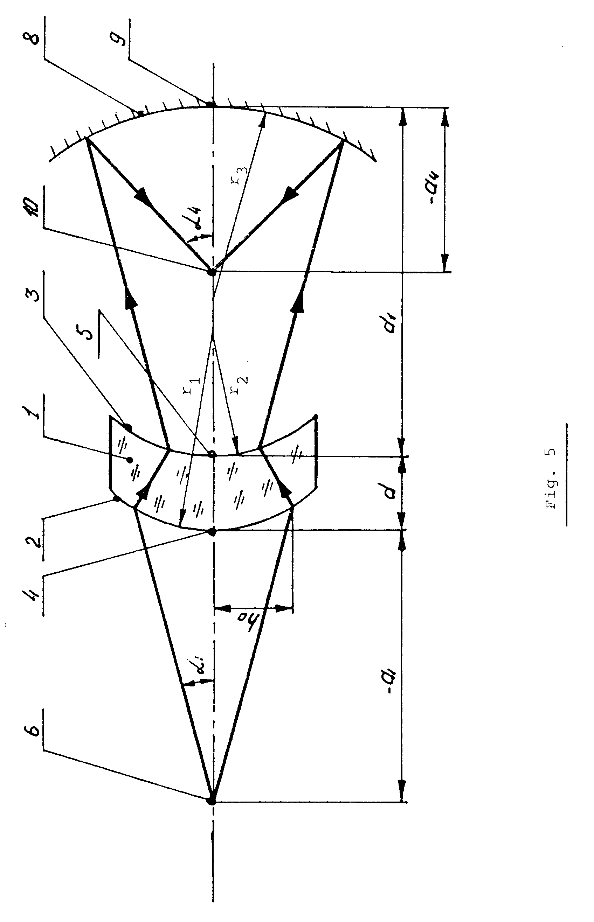

In Fig. 5 ist ein Objektiv zur Übertragung einer Abbildung aus dem Punkt 6 in den Punkt 10 oder beim umgekehrten Strahlengang aus dem Punkt 10 in den Punkt 6 gezeigt. In diesem Objektiv wirkt die Linse 1 zusammen mit einem sphärischen Spiegel 8, der im Abstand $d_1$ zwischen dem Scheitel 9 des Spiegels 8 und dem Scheitel 5 der Linse 1 angeordnet ist. Der Abstand $d_1$ und der Krümmungsradius $r_3$ der Spiegelfläche 8 sind so berechnet, daß sich eine Kompensation der gemeinsamen monochromatischen Aberrationen des Spiegels 8 und der Linse 1 unter der Bedingung der Achromasie der Linse 1 bei h = 20 mm ergibt. Die Anordnung gemäß Fig. 5 kann zur Übertragung einer Abbildung aus endlicher Entfernung sowie aus dem Unendlichen dienen. Für den Fall der Übertragung aus einer endlichen Entfernung $a_1$ = -385,135 mm errechneten sich die Parameter der Linse zu:

$r_1$ = 44,93 mm

$r_2$ = 36,19 mm

d = 19,26 mm.

Die Achromasie wurde für h = 20 mm berechnet. Der Krümmungsradius des Spiegels betrug $r_3$ = -150 mm. Der Abstand betrug $d_1$ = 198 mm.

Der Eintrittsaperturwinkel betrug $\alpha_1$ = 3 Grad; die Winkelvergrößerung des Systems

$$V = \alpha_4/\alpha_1 = 7$$

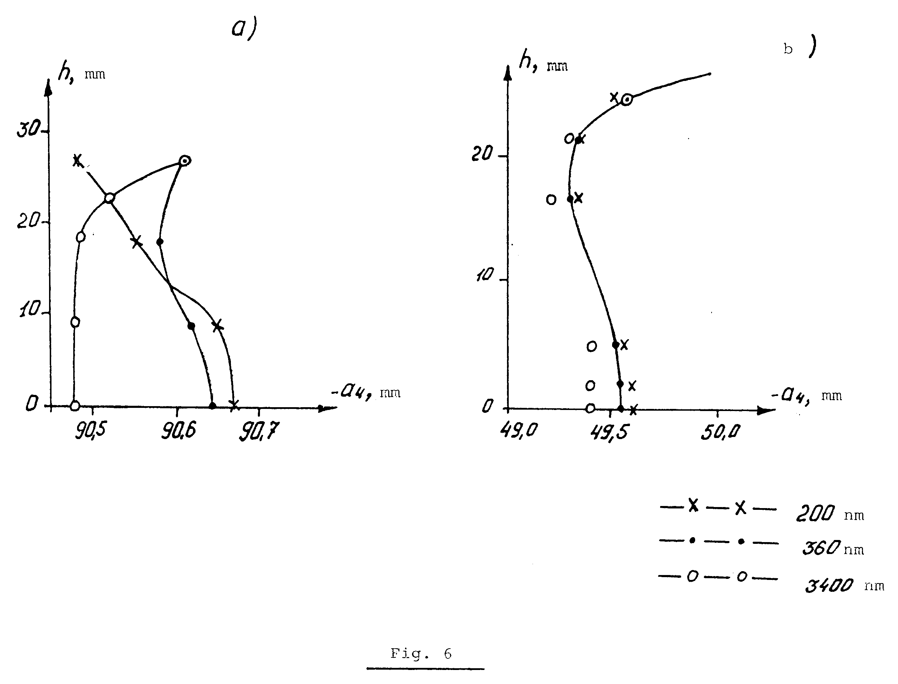

Fig. 6 a, b zeigt die Abhängigkeit der Größe $a_4$ - des Abstands der Abbildung des Punktes 6 im Punkte 10 vom Scheitel 9 des Spiegels 8 von dem Achsabstand h, in dem die Randstrahlen vom Punkt 6 die Fläche 2 der Linse 1 schneiden, d.h. in Fig. 6 a ist eine Größe gezeigt, die $\Delta a_3$ nahekommt, der chromatischen Längsaberration des optischen Systems nach Fig. 5 für die drei Wellenlängen 200 nm, 360 nm und 3400 nm bei einer Übertragung der Abbildung aus einem endlichen Abstand illustriert.

Die Analyse der Kurven in Fig. 6 a zeigt, daß die Anwendung der erfindungsgemäßen Linse zur Kompensation der sphärischen Aberrationen des Spiegels das System insgesamt fast fehlerfrei macht bzw. die Aberrationen minimiert. Bei einer Apertur bis 25 mm wird die Aberration nicht größer als ~ 0,12 nm. Dabei ist die Gesamtchromasie des Systems unbedeutend: Die chromatische Unschärfe des Punktes ist maximal ausgeprägt bei, h = 0 und beträgt 0,19 mm im Spektralbereich 200 bis 3400 nm und überschreitet nicht die Unschärfe auf Grund der verbleibenden sphärischen Aberration des Systems bei einer Wellenlänge von 200 nm und einer Apertur bis 25 mm.

Aur der Grundlage der Daten gemäß Fig. 6 a und der oben genannten Parameter des optischen Systems gemäß Fig. 5, kann die Größe der sphärischen Queraberration berechnet werden, welche y = 2,7 x $10^{-2}$ mm in einem Spektralbereich von 200 bis 3400 nm beträgt. Bei einer Eingrenzung des Bereichs auf 200 bis 1000 nm, was dem häufigsten Anwendungsgebiet von Spektralgeräten, Beleuchtungseinrichtungen und dergl. entspricht, beträgt die genannte Aberration y < 0,01 mm. Dies ist zu vergleichen mit einer sphärischen Queraberration eines Spiegels 8 ohne Linse 1, welche 0,11 mm beträgt. Die vorgeschlagene Linse erlaubt es also, die sphärische Queraberration eines Spiegels um ein Mehrfaches zu verringern.

Die Linse nach Maksutov kann für diese Einsatzbedingungen nicht angewandt werden, da die Übertragung der Abbildung aus einer endlichen Entfernung stattfindet.

Die erfindungsgemäße Linse gewährleistet auch die Kompensation der Koma eines sphärischen Spiegels, was es erlaubt, die Abbildung langgestreckter Gegenstände ohne Verzerrung zu übertragen. Wenn das optische System gemäß Fig. 5 bei $a_1$ = -385,135 mm einen Punkt abbildet, der sich in der Ebene des Gegenstandes 6 in einer Entfernung von 10 mm von der optischen Achse befindet, so ergibt sich in der Abbildungsebene 10 bei einem Spektralbereich von 200 bis 3400 nm eine Unschärfe in einem Fleck des Durchmessers auf der Halbbreite von nicht mehr als 0,035 mm. Bei einem Bereich von 200 bis 1000 nm beträgt die Unschärfe nicht mehr als 0,02 mm.

Das Spiegelsystem gemäß Fig. 5 ohne Verwendung der vorgeschlagenen Linse ergibt eine Unschärfe des Punktes bis zu 0,1 mm, d.h. es liegt mindestens um das 5-fache schlechter.

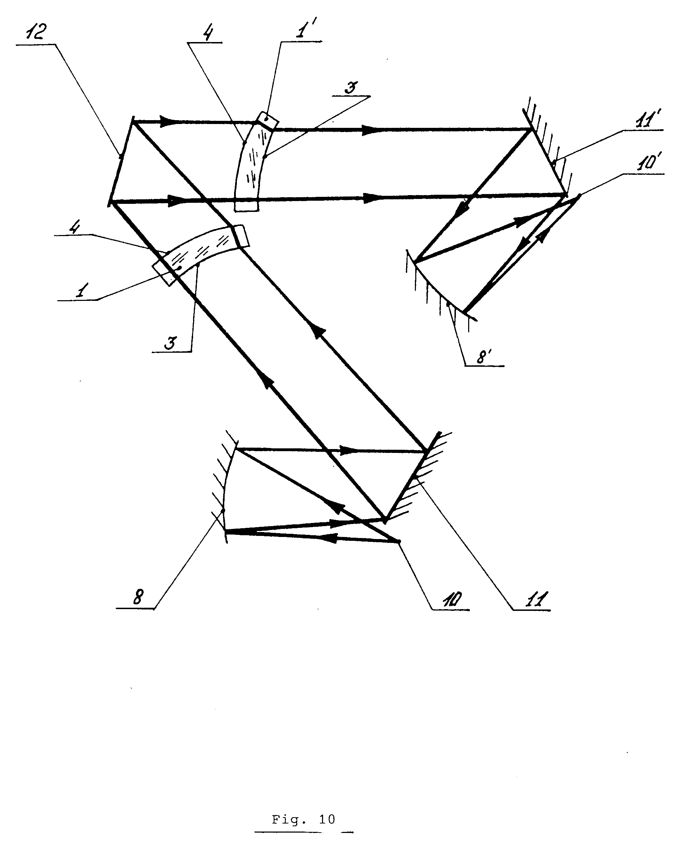

Das optische System gemäß Fig. 5 kann angewandt werden zur Übertragung von Abbildungen aus dem Unendlichen auf eine endliche Entfernung. In diesem Fall, beispielsweise bei $a_1$ = $10^5$ mm, $r_1$ = 35 mm, d = 7 mm, $r_2$ = 30,7 mm wird die Achromasie der Linse für den Achsabstand h = 19 mm vorgegeben; $d_1$ = 135 mm, $r_3$ = 95 mm. Die Winkelvergrößerung des Systems beträgt V = 2140. Eine solche Lage des Gegenstandes und seiner Abbildung ist charakteristisch für Teleskope und Spektralgeräte. In Fig. 6 b ist der Verlauf der Aberrationskurven in diesem optischen System dargestellt. Es ist zu sehen, daß die Aberrationen des Spiegels in einem weiten Bereich des Spektrums gut kompensiert sind. Dabei stellen die Variationen der verbleibenden sphärischen Aberration eine wesentlich größere Größe dar, als die Größe der chromatischen Unschärfe des Lichtbündels. Das Fehlen einer merklichen Sphärochromasie der Linse erlaubt deren Anwendung zur wirksamen Kompensation von monochromatischen Aberrationen optischer Systeme. So beträgt die Halbbreite der sphärochromatischen Querunschärfe der Abbildung 10 des Punktes 6, der vom Scheitel 4 der Linse 1 um den Abstand $a_1$ = $10^5$ mm entfernt ist, d.h. praktisch im Unendlichen liegt, in einem Spektralbereich von 200 bis 3400 nm nur 0,04 mm. Die Anwendung einer Linse nach Maksutov anstelle der vorgeschlagenen Linse ergibt eine Größe von 0,1 mm, d.h. um das 2,5-fache schlechter. Fehlt eine Korrekturlinse überhaupt, d.h. findet nur der Spiegel Anwendung, so ist ein Niveau der Aberrationsunschärfe von 0,25 mm kennzeichnend.

Wenn die Breite des Spektrums auf den Bereich 200 bis 1000 nm beschränkt wird, so beträgt die Größe der Aberrationsquerunschärfe des Punktes im kompensierten Spiegelsystem 0,01 mm auf der Halbbreite, d.h. sie liegt um das 25-fache besser als mit nur dem Spiegel oder um das 10-fache besser, als mit einer Linse nach Maksutov. Im beschriebenen optischen System ist die Lichtstärke des Objektivs F > 1.

Die angeführten Beispiele zeigen, daß für ein lichtstarkes optisches System mit einem Strahlengang ins Unendliche die erfindungsgemäße Linse die Aberrationseigenschaften des Objektivs um wenigstens das 2- bis 3-fache im Vergleich zu einer Linse nach Maksutov verbessern kann. Bei der Verwendung einer erfindungsgemäßen Linse verbessern sich der Kontrast und die Auflösung der Gegenstandsabbildung, weil die achromatische Korrektur der monochromatischen Aberrationen im Gebiet der nicht paraxialen Strahlen erzielt wird. Die erfindungsgemäße Linse erlaubt die Verwendung von großen Eintrittsaperturen und die Verwirklichung großer Eintrittsaperturwinkel ohne Verschlechterung der Aberrationskennwerte, dabei auch im ultravioletten Bereich des Spektrums.

Auf diese Weise kann die vorgeschlagene Linse in einem breiten Bereich optischer Systeme Anwendung finden als achromatischer Kompensator (Korrekturlinse) monochromatischer Aberrationen, z.B. bei Objektiven, in Beleuchtungseinrichtungen zum wirksamen Auffangen des Lichtes von punktförmigen oder gestreckten Lichtquellen und zur Übertragung von hohen Lichtleistungen sowohl auf große Entfernungen, als auch zur Erzeugung einer großen Beleuchtungsdichte bei der Fokussierung auf kleine zu beleuchtende Flächen; in Objektiven, die zum wirksamen Auffangen und zur Übertrgaung schwacher Lichtsignale und schwach beleuchteter Abbildungen bestimmt sind, in Objektiven von Kino- und Fotoapparaten, darunter von Projektionseinrichtungen, wobei die Linse einzeln auftretende Aberrationen kompensieren kann sowie die einiger Spiegelelemente in einem komplizierten optischen System, in Spektralapparaten, die im Spektralbereich vom ultiavioletten bis zum infraroten Gebiet betrieben werden.

Fig. 7 zeigt schematisch einen Beleuchtungskondensor, in dem eine achromatische Linse 1 zur Korrektur der monochromatischen Aberrationen des Spiegels 8 verwendet ist. Im Vergleich zu dem optischen System gemäß Fig. 5 ist hier der Strahlengang umgekehrt. Die Strahlen von der Lichtquelle 10, die in der Entfernung $a_4$ vom Scheitel 9 des Spiegels 8 angeordnet ist, werden am Spiegel 8 reflektiert und bilden nach Durchgang durch die achromatische Linse 1 die Abbildung der Lichtquelle 10 in der Ebene 6. Der Strahl, für den die Rechnung zur Erfüllung der Achromasiebedingung nach der Formel durchgeführt wird, tritt aus der Linsenfläche 2 im Achsabstand $h_0$ aus.

Die Anwendung der erfindungsgemäßen achromatischen Linse in Objektiven zur Beleuchtung von Objekten erlaubt die Korrektur von monochromatischen Aberrationen des Spiegels und die Erzeugung hoher Energiedichten der Lichtenergie auf kleinen Flächen der Objekte, und zwar bei Verwendung von hellen Punktlichtquellen.

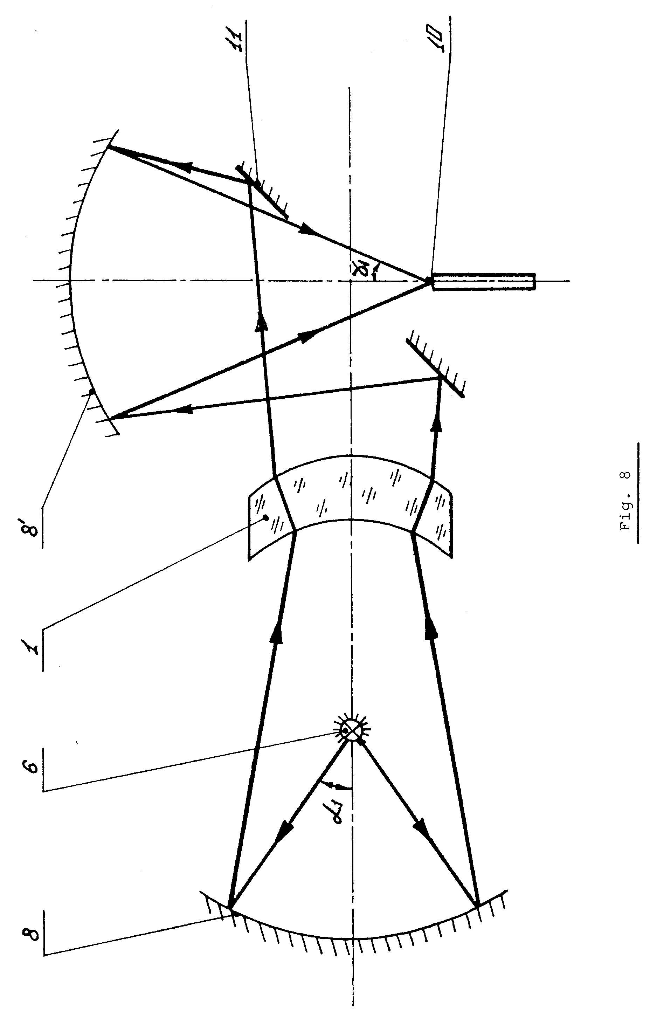

Fig. 8 zeigt schematisch ein lichtstarkes Objektiv, das die Möglichkeit der Korrektur der monochromatischen Aberrationen von zwei sphärischen Spiegeln 8, 8' durch eine Linse 1 illustriert. Das Licht der Quelle 6 wird durch den sphärischen Spiegel 8 gesammelt, tritt durch die Korrekturlinse 1, wird an einem ebenen Spiegel 11 auf einen zweiten sphärischen Spiegel 8' reflektiert, der die Abbildung der Lichtquelle 6 auf die Ebene 10 fokussiert. Die Korrektur der monochromatischen Aberration der Spiegel 8, 8' erlaubt es, einen Fokus 10 mit einem Durchmesser unterhalb von 0,1 mm bei einer Eintrittsapertur von $\gamma_1$ = 30 Grad zu erzielen. Dabei wird ein wirksames Auffangen des Lichts der Quelle und dessen Fokussierung auf eine kleine Fläche erreicht, was eine große praktische Bedeutung hat, beispielsweise für die Übertragung hoher Lichtenergiedichten von gewöhnlichen Lampenlichtquellen, beispielsweise mit Hilfe von dünnen Lichtleitern. Besondere Bedeutung kann ein solches Objektiv haben zur Erzielung hoher Dichten ultravioletter Strahlungen von Quecksilber-Gasentladungslampen oder Xenon-Quecksilber-Lampen. Beispielsweise kann mit einer Quecksilber-Lampe der Leistung 250 W bei Verwendung eines Objektivs gemäß Fig. 7 eine Integralleistung von 100 mW der ultravioletten Strahlung von 250 bis 300 nm auf einer Fläche des Durchmessers 0,5 mm erzielt werden, was einer ununterbrochenen Leistungsdichte von 50 W/cm² äquivalent ist. Zur Zeit können derartige Leistungsdichten im genannten Bereich von 250 bis 300 nm nur mit Hilfe teurer und leistungsfähiger Excimerlaser erreicht wreden.

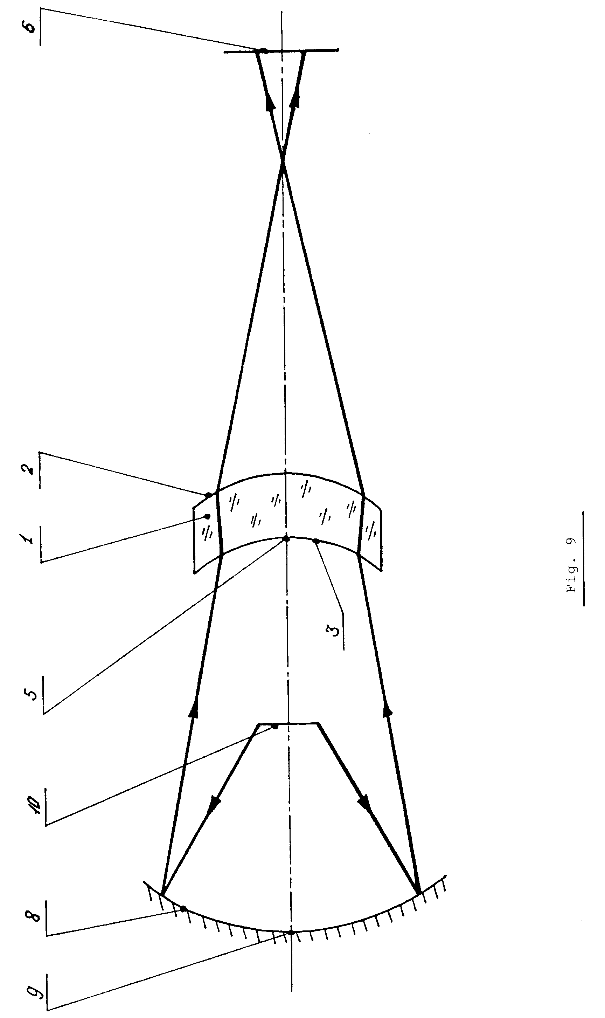

Fig. 9 zeigt das Objektiv eines Kino- oder Diaprojektors, in dem eine erfindungsgemäße achromatische Linse zur Kompensation der monochromatischen Aberrationen eines Spiegels verwendet wird. Im Vergleich zur Fig. 4 ist hier der Strahlengang umgekehrt. Die vom Bild 10 ausgehende Strahlung wird an dem sphärischen Spiegel 8 reflektiert und erzeugt nach Durchgang durch die achromatische Linse 1 die Abbildung in der Ebene der Bildwand 6. Die Anwendung der erfindungsgemäßen achromatischen Linse in Objektiven von Kino- oder Diaprojektoren erlaubt die Erzielung einer hohen Abbildungsqualität, einer erhöhten Auflösung bei großer Bildfläche und großer Lichtstärke des Objektivs, und zwar wegen der Verbesserung der Aberrationskennwerte.

Fig 10 zeigt einen Monochromator, in dem zwei erfindungsgemäße achromatische Linsen zur Kompensation der monochromatischen Aberration der sphärischen Spiegel dienen. Das optische System des Monochromators hat am Eintritt ein Spiegelobjektiv der Lichtstärke D = 0,5 mit einem Fokalabstand von 100 mm. Die Strahlung vom Schlitz 10 fällt auf den sphärischen Spiegel 8, wird von diesem in Form eines schwach konvergenten Strahls auf den ebenen Spiegel 11 reflektiert und fällt durch die achromatische Linse 1 auf das Diffraktionsgitter 12, wonach es durch eine zweite achromatische Linse 1' tritt, von einem ebenen Spiegel 11' auf einen sphärischen Spiegel 8' und von diesem auf den Austrittsspalt 10' reflektiert, wo sie eine Abbildung des Eintrittsschlitzes 10 erzeugt. In dieser Anordnung bewirkt die achromatische Linse die Übertragung der Abbildung aus einem endlichen Abstand in das Unendliche und korrigiert die monochromatischen Aberrationen der Spiegel 8 und 8', was eine Erhöhung der Auflösung der Abbildung des Eintrittsschlitzes 10 im Austrittsschlitz 10' ermöglicht. Diese Anordnung erlaubt die Erzeugung der Abbildung des Schlitzes 10 einer Höhe von bis zu 10 mm. Dabei ist im Spektralbereich von 200 bis 1000 nm die Auflösung am Austrittsschlitz nicht schlechter als 0,05 mm. Die Anwendung der achromatischen Linse zur Korrektur der monochromatischen Aberrationen eines Spiegelmonochromators erlaubt die Erhöhung der Lichtstärke des Eintrittsobjektivs, die Erhöhung der Spektralauflösung bei Verringerung der Abmessungen auf Grund einer Verringerung des Fokalabstandes.

Die vorstehend beschriebenen Anwendungsfälle der vorgeschlagenen achromatischen Linse sind als Beispiele zu verstehen; in ähnlicher Weise sind Anwendungen möglich in anderen optischen Systemen, z.B. Polychromatoren, Spektrofotometer, Fernrohren, Projektoren, breitwand- und lichtstarken Foto, Kino und Teleobjektiven und dergl.

## Patentansprüche

**1.** Achromatische Linse mit zwei sphärischen Brechungsflächen der Krümmungsradien $r_1$ und $r_2$ und mit einer Dicke d, bestehend aus einem Werkstoff des Brechungskoeffizienten n,

dadurch gekennzeichnet, daß die Parameter $r_1$, $r_2$, d und n sowie die Koordinate $a_1$ des Gegenstandes bezüglich der ersten Brechungsfläche
der Linse und der Achsabstand $h_0$, in dem der zur Achromatisierung ausgewählte Strahl von der Spitze des Gegenstandes durch die erste Brechungsfläche tritt, durch folgende Beziehung bestimmt ist

$\xi_1 \sin(\gamma)\cos(\gamma - \omega) - \xi_2 \sin(\omega) = 0$, mit.

$$\beta_1 = \text{arcsin} \left( \frac{h_o}{r_1} \right)$$

$$\alpha_1 = \text{arctg} \frac{h_o}{[a_1 - r_1(1 - \cos \beta_1)]}$$

$$\varepsilon_1 = \text{arcsin} \left( \frac{r_1 - a_1}{r_1} \sin \alpha \right)$$

$\nu = \beta_1 + \text{arcsin} \left( \frac{1}{n} \sin \varepsilon_1 \right)$

$$\psi = r_1 \left[ \frac{\sin \beta_1}{\text{tg } \nu} + (1 - \cos \beta_1) \right] - d$$

$$\xi_4 = - \frac{\sin \varepsilon_1}{n \sqrt{n^2 - \sin^2 \varepsilon_1}}$$

$$\xi_5 = - r_1 \frac{\sin \beta_1}{\sin^2 \nu} \xi_4$$

$$\varepsilon_2 = \text{arcsin} \left( \frac{r_2 - \psi_2}{r_2} \sin \nu \right)$$

$\omega = \nu - \varepsilon_2$

$$\xi_3 = \frac{1}{r_2 \cos \varepsilon_2} \left[ -\xi_5 \sin \nu + \xi_4 (r_2 - \psi) \cos \nu \right]$$

$\gamma = \omega + \text{arcsin} (n \sin \varepsilon_2)$

$\xi_1 = \xi_4 - \xi_3$

12

EP 0 489 378 A1

$$\xi_2 = \xi_1 + \frac{\sin \varepsilon_2 + \xi_3 n \cos \varepsilon_2}{\sqrt{1 - n^2 \sin^2 \varepsilon_2}}.$$

wobei für die Strahlen innerhab der benutzten Apertur der Linse im gesamten vorkommenden Spektralbereich die Bedingung

$$\frac{1}{a_3} \, V \, \frac{da_3}{dn} \, tg\alpha_1 \cong 0$$

erfüllt ist, mit
$a_3$ Koordinate der Ebene der Abbildung (7) bezüglich des Scheitels (5) der zweiten Brechungsfläche (3) der Linse (1),
$V$ Winkelvergrößerung der Linse im Gang des Strahls, der von der Spitze des Gegenstandes unter dem Winkel $\alpha_1$ zur optischen Achse ausgeht und innerhalb der Apertur durch die erste Brechungsfläche tritt.

2. Achromatische Linse nach Anspruch 1, dadurch gekennzeichnet, daß einer der Krümmungsradien ($r_1$ oder $r_2$) der Brechungsflächen Unendlich beträgt.

3. Achromatische Linse nach Anspruch 1 oder 2, gekennzeichnet durch

die Beziehung $\quad 0 < \left| \frac{h_0}{r_1} \right| \leq 1 \quad\quad$ sowie

die Beziehung $\quad 0 < \left| \frac{h_0}{a_1} \right| \leq 10,$

vorzugsweise $\quad 0 < \left| \frac{h_0}{a_1} \right| \leq 2,$

insbesondere $\quad 0 < \left| \frac{h_0}{a_1} \right| \leq 1.$

4. Achromatische Linse nach einem oder mehreren der vorhergehenden Ansprüche, gekennzeichnet durch eine Achromatisierung für das Gebiet von 200 bis 3400 nm, vorzugsweise das Gebiet von 200 bis 1200 nm.

5. Verwendung der achromatischen Linse nach einem der Ansprüche 1 bis 4 als Kompensator monochromatischer Aberrationen in optischen Systemen, welche Spiegelelemente enthalten, deren Oberfläche eine Krümmung zweiter Ordnung aufweisen.

6. Verwendung der achromatischen Linse nach einem der Ansprüche 1 bis 4 in optischen Systemen mit sphärischen Spiegelelementen.

7. Verwendung der achromatischen Linse nach einem der Ansprüche 1 bis 4 in einem Objektiv zur Beleuchtung von Objekten.

8. Verwendung der achromatischen Linse nach einem der Ansprüche 1 bis 4 in einem Fotoapparat, Kinoapparat oder Projektor.

9. Verwendung der achromatischen Linse nach einem der Ansprüche 1 bis 4 in einem Spektralgerät.

10. Verwendung der achromatischen Linse nach einem der Ansprüche 1 bis 4 in einem Monochromator.

11. Verwendung der achromatischen Linse nach einem der Ansprüche 1 bis 4 zusammen mit zwei sphärischen Spiegeln zur Konzentration eines Lichtstroms auf eine kleine Fläche.

Fig. 1

Fig. 2

erfindungsgemäße Linse

Linse nach Maksutov

—X—X— 200 nm

—•—•— 360 nm

—o—o— 3400 nm

Fig. 3

EP 0 489 378 A1

$|\Delta y|$

relative Einheiten

$h,$ mm

0  10  20  30  40

$|\Delta y|$

relative Einheiten

$h,$ mm

0  10  20  30  40

―――――  erfindungsgemäße Linse          ― ― ― ―  Linse nach Maksutov

Fig. 4

EP 0 489 378 A1

EP 0 489 378 A1

6   4   2   1   3   10   8

5

$\alpha_1$   $r_1$   $r_2$   $\alpha_4$   $r_3$   9

$h_a$

$-a_1$   $d$   $d_1$   $-a_4$

Fig. 5

a)

b)

—X—X— 200 nm

—•—•— 360 nm

—o—o— 3400 nm

Fig. 6

EP 0 489 378 A1

Fig. 7

EP 0 489 378 A1

Fig. 8

Fig. 9

Fig. 10

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | REVUE D'OPTIQUE, Band 30, Nr. 5, 1. Mai 1951, PARIS, Seiten 247-249; D.D. MAKSUTOV: "Meniques correteurs pour systemes a miroir" * Insgesamt * | 1-11 | G 02 B 17/00 G 02 B 17/08 G 02 B 3/00 |
| A | K. MICHEL, "Die wissenschaftlich und angewandte Photographie", 1962, Springer-Verlag, WIEN, AT * Seiten 118-120 * | 1 | |
| A | MAX BORN, "Optik", 1972, Springer-Verlag, Berlin . Heidelberg . New York * Seiten 75-80 * | 1 | |
| A | GB-A- 544 694 (BTHC) * Ansprüche; Figuren * | 1 | |
| A | DE-A- 907 709 (OUDE DELFT) * Ansprüche; Figuren * | 1 | RECHERCHIERTE SACHGEBIETE (Int. Cl.5) |
| A | DE-A- 881 264 (OUDE DELFT) * Ansprüche; Figuren * | 1 | G 02 B |
| A | DE-A- 869 150 (OUDE DELFT) * Ansprüche; Figuren * | 1 | |
| A | DE-A- 860 727 (OUDE DELFT) * Ansprüche; Figuren * | 1 | |
| A | DE-A-1 006 175 (OUDE DELFT) * Ansprüche; Figuren * | 1 | |

Der vorliegende Recherchenbericht wurde für alle Patentansprüche erstellt

| Recherchenort | Abschlußdatum der Recherche | Prüfer |
|---|---|---|
| DEN HAAG | 31-03-1992 | PFAHLER R. |

EPO FORM 1503 03.82 (P0403)